(19) Europäisches Patentamt
European Patent Office
Office européen des brevets

(11) Veröffentlichungsnummer : **0 059 978**
**B1**

(12) **EUROPÄISCHE PATENTSCHRIFT**

(45) Veröffentlichungstag der Patentschrift :
13.06.84

(51) Int. Cl.³ : **C 02 F   1/50, C 02 F   1/72**

(21) Anmeldenummer : 82101883.5

(22) Anmeldetag : 09.03.82

(54) **Verfahren zur chemischen Aufbereitung und Entkeimung von Wässern und Wassersystemen.**

(30) Priorität : 10.03.81 DE 3109070

(43) Veröffentlichungstag der Anmeldung :
15.09.82 Patentblatt 82/37

(45) Bekanntmachung des Hinweises auf die Patenterteilung : 13.06.84 Patentblatt 84/24

(84) Benannte Vertragsstaaten :
AT BE CH DE FR GB IT LI LU NL SE

(56) Entgegenhaltungen :
FR-A- 2 299 275
FR-A- 2 355 512
FR-A- 2 356 600
FR-E-   94 739

(73) Patentinhaber : BAYROL Chemische Fabrik G.m.b.H.
Lochhamer Strasse 29
D-8033 München-Martinsried (DE)

(72) Erfinder : Haas, Erich
Varnhagenstrasse 9
D-8000 München 60 (DE)
Erfinder : Metzner, Peter, Dr.
Lochhamer Strasse 27
D-8033 München-Martinsried (DE)
Erfinder : Pohl, Achim, Dr.
Prösslstrasse 9
D-8000 München 90 (DE)

(74) Vertreter : Wuesthoff, Franz, Dr.-Ing. et al
Patentanwälte Wuesthoff -v. Pech-
mann-Behrens-Goetz Schweigerstrasse 2
D-8000 München 90 (DE)

## Beschreibung

Zur Entkeimung von Wasser und zum oxidativen Abbau von im Wasser enthaltenen oxidierbaren Verunreinigungen wird seit langem und in großem Umfang Chlor in Form von Chlorgas oder als Chlorbleichlauge verwandt. Diese Chlorung weist bei der Aufbereitung von Wässern und Wassersystemen jedoch eine Reihe von Nachteilen auf, da bestimmte im Wasser enthaltene Verunreinigungen mit Chlor zu Verbindungen reagieren, die beispielsweise zu Geruch und im Falle von Badewasser zu Schleimhautreizungen führen. Neuerdings wurde außerdem festgestellt, daß die Chlorung von Wasser zur Bildung von Halogenverbindungen führt, die eine cancerogene Wirkung aufweisen. Auch die Verwendung von Brom anstelle von Chlor führt zur Bildung von entsprechenden Substanzen, deren toxische und cancerogene Wirkung sogar noch stärker ist. Eine Entkeimung von Wasser mit Ozon ist zumindest im Falle von Schwimmbadwasser ohne zusätzliche Verwendung von Chlor oder Brom nicht möglich, da Ozon selbst wegen seiner Giftigkeit nicht im Schwimmbadwasser enthalten sein darf und deswegen mittels eines Aktivkohlefilters aus dem Umwälzwasser, das durch den Ozonisator geleitet worden ist, vor dem Eintritt in das Becken entfernt werden muß. Der vorgeschriebene Gehalt an Desinfektionsmittel in der Umgebung des Badenden zur Verhinderung einer Übertragung von pathogenen Keimen kann daher auch bei Einsatz eines Ozonisators nur durch Zusatz von aktiven Halogenverbindungen zum Schwimmbadwasser erzielt werden.

Es hat nicht an Versuchen gefehlt, anstelle dieser Halogenverbindungen andere halogenfreie Desinfektionsmittel in der Wasseraufbereitung, besonders auch in der Aufbereitung von Schwimmbadwasser, anzuwenden. So ist die Verwendung von Peroxidverbindungen, z. B. Wasserstoffperoxid, Natrium- oder Kaliumpersulfat zur Wasserentkeimung seit langem bekannt. Ebenso bekannt ist die Bekämpfung des Algenwuchses mit Kupferionen und die Entkeimung von Wasser mit Silbersalzen aufgrund der seit über 80 Jahren bekannten oligodynamischen Wirkung des Silbers. Auch die Kombination von Peroxidverbindungen mit Silber- bzw. Kupferionen wird beschrieben ebenso wie die Kombination von quartären Ammoniumverbindungen mit Wasserstoffperoxid (vgl. DE-A 22 35 539, DE-A 25 30 487 und DE-A 29 11 288).

Alle diese Verfahren sind zwar geeignet, Wasser zu entkeimen, jedoch wird bei keinem der genannten Verfahren eine Keimtötungsgeschwindigkeit im Bereiche von Sekunden oder Minuten erreicht, wie dies bei der Verwendung von Chlor, brom oder Ozon bekannt ist und im Falle der Aufbereitung von Wasser öffentlicher Bäder auch als notwendig angesehen wird.

Überraschenderweise wurde nun gefunden, daß bei Verwendung einer Kombination von quartären Ammoniumverbindungen, wasserlöslichen Kupfer- und/oder Silbersalzen und Peroxidverbindungen die Keimtötungsgeschwindigkeit so erhöht werden kann, daß sie im Bereich der Keimtötungsgeschwindigkeit durch Chlor liegt. Auf diese Weise können die Anforderungen an die Desinfektion von Wasser öffentlicher Schwimmbäder ohne die Verwendung von Halogenen erfüllt werden. Der gleichzeitig erforderliche oxidative Abbau von oxidierbaren Verunreinigungen ist bei dem neuen Verfahren ebenfalls sichergestellt. Auch bei Brauchwässern, z. B. Kühlwasser technischer Anlagen, werden bakterielle Verunreinigungen und unangenehme Geruchsentwicklung sicher verhindert.

Zur Durchführung des erfindungsgemäßen Verfahrens empfiehlt es sich, eine vorgefertigte wässrige Lösung des Biocidgemisches aus quartären Ammoniumverbindungen und den Kupfer- und/oder Silbersalzen zu verwenden, die dann zusammen mit der dritten Komponente, d. h. der Peroxidverbindung, dem Wasser zugefügt wird. Da die dem Wasser zugesetzten Peroxidverbindungen sich allmählich durch die Zersetzung und Sauerstoffabgabe verbrauchen, empfiehlt es sich, in gewissen Zeitabständen die Peroxidverbindung dem Wasser erneut zuzusetzen, um stoßweise eine vollständige Desinfektion sicherzustellen und eventuell vorhandene oxidierbare Verunreinigungen abzubauen. In dem Biocidgemisch kann das Verhältnis von quartärer Ammoniumverbindung und den wasserlöslichen Kupfersalzen und/oder Silbersalzen in einem weiten Gewichtsverhältnis von 1 : 10 bis 500 : 1 vorliegen. Vorzugsweise soll das Verhältnis 1 : 1 bis 100 : 1 betragen. Die Peroxidverbindung soll dem Wasser in einer Menge zugesetzt werden, daß ihre Konzentration 1 bis 100 ppm beträgt.

Durch die Anwendung der neuen Kombination wird eine sichere Desinfektion bei Badewasser erreicht und gleichzeitig die Entwicklung von Algen verhindert, ohne daß dem Wasser stark riechende und die Schleimhäute reizende Stoffe zugesetzt werden müssen, wie dies bei der Behandlung mit Ozon oder Chlorgas bzw. bei Verwendung von Chlorbleichlauge der Fall ist. Auch bei industriellen Kühlwassersystemen, bei denen das Wasser meistens im Kreislauf geführt wird, hat sich die neue Kombination sehr bewährt. Ohne korrosiv zu sein, verhindert sie im Brauchwasser bakterielles Wachstum, das bekanntlich zu unangenehmen Gerüchen und anderen Störungen in den betreffenden Vorrichtungen und Anlagen führen kann.

Als quartäre Ammoniumverbindungen in den Biocidmischungen eignen sich u. a. Verbindungen vom Typ des n-Alkyl-dimethylbenzyl-ammoniumchlorids, wobei der Alkylrest 8-18 C-Atome aufweisen kann ; weiterhin Verbindungen vom Typ n-Alkyl-N,N-dimethyl-(2-hydroxy-3-butoxy)-propyl-ammoniumchlorid mit Alkylrest von 12 bis 16 C-Atomen, Verbindungen vom Typ Dialkyldimethylammoniumchlorid mit Alkylrest von 8 bis 10 C-Atomen sowie Verbindungen vom Typ Alkyltrimethylammoniumchlorid mit Alkylrest von 12 bis 16 C-Atomen. Diese Verbindungen können entweder in Gemischen verschiedener Kettenlängen oder als reinkettige Verbindungen verwendet werden.

2

Weitere geeignete Ammoniumverbindungen, die erfindungsgemäß bei der Kombination verwendet werden können, sind :

Cetylpyridiniumchlorid, Trimethylbenzyl-ammoniumchlorid, Diisobutyl-phenoxy-äthyldi-methylbenzyl-ammoniumchlorid, Polydiallyl-dimethyl-ammoniumchlorid, Poly-[1,4-dimethylazonia-7-oxa-nonan-] dichlorid, Poly[1,4-dimethylazonia-6-hydroxyheptan-dichlorid]. Als besonders geeignet haben sich für die neue Kombination das Hexadecyl-N,N'-dimethylbenzyl-ammoniumchlorid und das Poly-[1,4-dimethylazonia-7-oxa-nonan-] dichlorid und das Poly-[1,4-dimethylazonia-7-oxa-nonan-] dichlorid erwiesen. Als Schwermetallsalze in den Biocidmischungen kommen die wasserlöslichen Salze des Kupfers und Silbers in Frage, wie z. B. Kupfersulfat, Kupfernitrat, Kupferchlorid, Silbersulfat und Silbernitrat. Als Peroxidverbindungen für die erfindungsgemäße Kombination eignen sich u. a. Natriumperoxysulfat, Kaliumperoxysulfat, Kalium- bzw. Natrium-hydrogen-monopersulfat, sowie wässrige Lösungen von Wasserstoffperoxid. Von diesen Peroxidverbindungen erweisen sich als besonders wirksam das Kaliumperoxy-disulfat sowie das Kalium-hydrogen-monopersulfat, die auch eine gute Stabilität bei der Lagerung in trockenem Zustand besitzen und sich dann bei der Anwendung schnell und leicht im Wasser auflösen.

Zum Nachweis der überraschenden potenzierenden Wirkung der neuen Kombination wurden folgende Vergleichsversuche hinsichtlich der Keimtötungsgeschwindigkeit durchgeführt, deren Ergebnis in den nachfolgenden Tabellen enthalten ist. Die Messung der Keimtötungsgeschwindigkeit erfolgte hierbei gemäß den « Empfehlungen für die Prüfung und Bewertung der Wirksamkeit chemischer Desinfektionsverfahren », Zbl. Bakt. Hyg. I Abt. Orig. B 165, 335-380 (1977). Als Testkeime wurden E. coli bzw. Pseudomonas aeruginosa verwendet. Anstelle dieser Testkeime können aber auch Staphylococcus aureus herangezogen werden.

Es wurden verwendet :

Als Peroxidverbindung das Kaliumhydrogenmono-persulfat und als quartäre Ammoniumverbindung bei der Testreihe der Tabelle I das Poly-[1,4-dimethylazonia 7-oxa-nonan]-dichlorid und bei der Testreihe der Tabelle II das n-Hexadecyl-N,N-dimethyl-(2-hydroxy-3-butoxy)-propyl-ammoniumchlorid, und als Kupferverbindung in beiden Reihen reines Kupfersulfat.

## Tabelle I

Testkeim : *Escherichia coli* Keimdichte : $2,6 \times 10^6$ KBE/ml (keimbildende Einheiten/ml)

| Konzentration der Komponenten im Wasser | Rest-KBE/ml nach Einwirkungszeit | | |
|---|---|---|---|
| | 1 Min | 3 Min | 5 Min |
| 10 ppm Peroxidverbindung | $2,54 \times 10^6$ | $2,52 \times 10^6$ | $2,46 \times 10^6$ |
| 10 ppm Peroxidverbindung 2 ppm CuSO$_4$ | $2,11 \times 10^6$ | $1,73 \times 10^6$ | $1,65 \times 10^6$ |
| 10 ppm Peroxidverbindung 7,5 ppm quartäre Ammoniumverbindung | $2,4 \times 10^6$ | $1,18 \times 10^6$ | $7,4 \times 10^5$ |
| 10 ppm Peroxidverbindung 7,5 ppm quartäre Ammoniumverbindung 2 ppm CuSO$_4$ | 80 | 0 | 0 |

## Tabelle II

Testkeim : *Pseudomonas aeruginosa* Keimdichte : $5,9 \times 10^5$ KBE/ml

| Konzentration der Komponenten im Wasser | Rest-KBE/ml nach Einwirkungszeit | | | |
|---|---|---|---|---|
| | 30 sek | 1 Min | 3 Min | 5 Min |
| 2 ppm CuSO$_4$ | $5,2 \times 10^5$ | $4,8 \times 10^5$ | $5,3 \times 10^5$ | $4,9 \times 10^5$ |
| 7,5 ppm quartäre Ammoniumverbindung | $2,7 \times 10^3$ | $2,3 \times 10^3$ | $1,9 \times 10^3$ | $1,6 \times 10^3$ |
| 10 ppm Peroxidverbindung | $4,5 \times 10^5$ | $4,9 \times 10^5$ | $4,8 \times 10^5$ | $5,5 \times 10^5$ |
| 10 ppm Peroxidverbindung 2 ppm CuSO$_4$ | $3,2 \times 10^4$ | $2,7 \times 10^3$ | $1 \times 10^2$ | $1 \times 10^2$ |
| 10 ppm Peroxidverbindung 7,5 ppm quartäre Ammoniumverbindung | $2,5 \times 10^3$ | $1,3 \times 10^3$ | $1 \times 10^3$ | $9 \times 10^2$ |
| 2 ppm CuSO$_4$ 7,5 ppm quartäre Ammoniumverbindung | $2,1 \times 10^3$ | $1,4 \times 10^3$ | $1,2 \times 10^3$ | $8,7 \times 10^2$ |
| 10 ppm Peroxidverbindung 2 ppm CuSO$_4$ 7,5 ppm quartäre Ammoniumverbindung | $4,7 \times 10^4$ | $1,3 \times 10^3$ | 80 | 0 |

**0 059 978**

Es ist ersichtlich, daß die schnelle Abtötung der verunreinigenden Keime im Wasser durch eine überraschende potenzierende synergistische Wirkung der 3 Komponenten erreicht wird, die nicht mit der bloßen Addition ihrer Wirkung erklärt werden kann.

Beispiel 1

Einem Schwimmbecken von 100 m³ Inhalt wurde eine Mischung von 30 % Poly-(1,4-dimethylazonia-7-oxa-nonan)-dichlorid und 5 % Kupfer-II-sulfat-5-hydrat in wässriger Lösung in einer Menge von 1,5 Liter entsprechend 15 ppm dieser Mischung zugesetzt. Außerdem wurde dem Wasser 1 kg Kaliumhydrogenmono persulfat hinzugefügt entsprechend 10 ppm dieser Verbindung. Während des Badebetriebes wurden dem Becken 100 ml Badewasser mit den genannten Zusätzen entnommen und mit $2 \times 10^6$ KBE/ml *Escherichia coli* versetzt, wobei eine sofortige Durchmischung durch kräftiges Rühren sichergestellt wurde. Anschließend wurde die Keimtötungsgeschwindigkeit gemäß den Empfehlungen der DGHM (deutsche Gesellschaft für Hygiene und Microbiologie) gemessen. Die Rest-KBE betrug nach 30 sec $1,2 \times 10^3$ KBE. Somit ist die Forderung nach einer Abtötung von 3 Zehnerpotenzen *E. coli* innerhalb von 30 sec durch die genannten Zusätze erfüllt.

Beispiel 2

Einem Brauchwassersystem, Inhalt 10 m³, in dem es auf schnelle und möglichst vollständige Abtötung aller Mikroorganismen ankommt, wurde eine Mischung von 30 % n-Hexadecyl-N,N-dimethyl-(2-hydroxy-3-butoxy)-propylammoniumchlorid und 5 % Kupfer-II-sulfat-5-hydrat in wässriger Lösung in einer Menge von 250 ml entsprechend einer Konzentration von 25 ppm zugegeben. In Anbetracht der kontinuierlichen Abschlämmung und der ebenso kontinuierlichen Frischwasserzufuhr in dieser Anlage wurde mittels Dosieranlagen dafür gesorgt, daß ständig ein Gehalt der genannten Biocidmischung von mindestens 20 ppm und der Peroxidverbindung von mindestens 15 ppm aufrechterhalten wurde.

Zur Messung der Keimtötungsgeschwindigkeit wurden während des Betriebes der Anlage Wasserproben von jeweils 100 ml entnommen und diese in einem Fall mit *Staphylococcus aureus,* in einem weiteren Fall mit *Pseudomonas aeruginosa* beimpft. Die Keimdichte wurde jeweils auf ca. $10^6$ KBE/ml eingestellt (*Staph. aureus* 1,6 % $10^6$ KBE/ml, *Pseudomonas aeruginosa* 9,2 $\times$ $10^5$ KBE/ml). Nach 1 Minute betrugen die Restkeimzahlen für *Staphylococcus aureus* 30 KBE/ml und für *Pseudomonas aeruginosa* 1,3 $\times 10^3$ KBE/ml. Demzufolge war eine Verringerung der Keimzahl selbst im Falle der erfahrungsgemäß schwer abzutötenden Pseudomonaden um 3 Zehnerpotenzen innerhalb von 1 Minute mit den genannten Zusätzen möglich.

**Ansprüche**

1. Verfahren zum chemischen Aufbereiten, insbesondere zum Entkeimen von Wasser und oxidativen Abbau von in Wasser enthaltenen oxidierbaren Verunreinigungen, dadurch gekennzeichnet, daß dem Wasser eine Kombination von
    a) quartären Ammoniumverbindungen,
    b) wasserlöslichen Kupfersalzen und/oder Silbersalzen und
    c) eine sauerstoffabspaltende Peroxidverbindung zugesetzt wird.

2. Verfahren nach Anspruch 1, dadurch gekennzeichnet, daß im Wasser ständig ein Gehalt an quartären Ammoniumverbindungen und den Kupfer- und/oder Silbersalzen aufrechterhalten wird und zur Stoßweisen vollständigen Desinfektion sowie zum oxidativen Abbau der oxidierbaren Verunreinigungen dem Wasser die Peroxidverbindung in gewissen Zeitabständen zugesetzt wird.

3. Verfahren nach Anspruch 1 oder 2, dadurch gekennzeichnet, daß die quartären Ammoniumverbindungen und die Kupfer- und/oder Silbersalze in einem Gewichtsverhältnis von 1 : 10 bis 500 : 1 verwendet werden, vorzugsweise in einem Verhältnis von 1 : 1 bis 100 : 1.

4. Verfahren nach Anspruch 1 bis 3, dadurch gekennzeichnet, daß die Peroxidverbindung dem Wasser in einer Menge von 1-100 ppm zugesetzt wird.

5. Verfahren nach Anspruch 1-4, dadurch gekennzeichnet, daß als Peroxidverbindung Kaliumhydrogenmonopersulfat verwendet wird.

6. Verfahren nach Anspruch 1-4, dadurch gekennzeichnet, daß als Peroxidverbindung Kaliumperoxydisulfat verwendet wird.

**Claims**

1. A process for chemical treatment, in particular for sterilisation of water and oxidative degradation of oxidisable impurities contained in water, characterised in that a combination of
    a) quaternary ammonium compounds,
    b) water-soluble copper salts and/or silver salts and

4

.

c) and an oxygen-generating peroxide compound is added to the water.

2. The process according to claim 1, characterised in that in the water a content of quaternary ammonium compounds and of copper and/or silver salts is continuously maintained and the peroxide compound is added at certain intervals of time to the water for a jerking, complete disinfection and oxidative degradation of the oxidisable impurities.

3. The process according to claims 1 or 2, characterised in that the quaternary ammonium compounds and the copper and/or silver salts are used in a weight ratio of 1 : 10 to 500 : 1, preferably in a ratio of 1 : 1 to 100 : 1.

4. The process according to claims 1 to 3, characterised in that the peroxide compound is added to the water in an amount of 1-100 ppm.

5. The process according to claims 1-4, characterised in that potassium hydrogen monopersulphate is used as peroxide compound.

6. The process according to claims 1-4, characterised in that potassium peroxydisulphate is used as peroxide compound.

**Revendications**

1. Procédé de traitement chimique, en particulier de stérilisation de l'eau et de décomposition oxydative d'impuretés oxydables contenues dans l'eau, caractérisé en ce qu'on ajoute à l'eau une combinaison de
    a) composés d'ammonium quaternaire
    b) sels de cuivre et/ou sels d'argent solubles dans l'eau et
    c) un composé peroxyde perdant de l'oxygène.

2. Procédé selon la revendication 1, caractérisé en ce qu'on maintient constamment dans l'eau une certaine teneur en composés d'ammonium quaternaire et en sels de cuivre et/ou d'argent et en ce qu'on ajoute à l'eau le composé peroxyde à des intervalles de temps déterminés aux fins de désinfection complète progressive ainsi qu'aux fins de dégradation oxydative des impuretés oxydables.

3. Procédé selon l'une des revendications 1 ou 2, caractérisé en ce qu'on utilise les composés d'ammonium quaternaire et les sels de cuivre et/ou d'argent dans un rapport pondéral de 1 : 10 à 500 : 1, de préférence dans un rapport de 1 : 1 à 100 : 1.

4. Procédé selon l'une des revendications 1 à 3, caractérisé en ce qu'on ajoute le composé peroxyde à l'eau en une quantité de 1-100 ppm.

5. Procédé selon l'une des revendications 1-4, caractérisé en ce qu'on utilise comme composé peroxyde le monopersulfate acide de potassium.

6. Procédé selon l'une des revendications 1-4, caractérisé en ce qu'on utilise comme composé peroxyde le peroxy-disulfate de potassium.